# EUROPÄISCHE PATENTSCHRIFT

(11) **EP 2 659 318 B1**
(45) Veröffentlichungstag und Bekanntmachung des Hinweises auf die Patenterteilung: **27.05.2015**
(21) Anmeldenummer: 11788103.7
(22) Anmeldetag: 17.11.2011
(51) Int. Cl.: G05B 19/4062

(54) **VERFAHREN UND VORRICHTUNG ZUM BEREITSTELLEN EINER BEWEGUNGSANGABE, INSBESONDERE FÜR EINE BLOCKIERERKENNUNG EINES SCHLIESSSYSTEMS**
METHOD AND APPARATUS FOR PROVIDING AN INDICATION OF MOVEMENT, PARTICULARLY FOR RECOGNITION OF BLOCKING IN A LOCKING SYSTEM
PROCÉDÉ ET DISPOSITIF DESTINÉS À FOURNIR UNE INFORMATION DE DÉPLACEMENT, NOTAMMENT POUR DÉTECTER LE BLOCAGE D'UN SYSTÈME DE FERMETURE

(30) Priorität: 27.12.2010 DE 102010064213
(43) Veröffentlichungstag der Anmeldung: 06.11.2013
(73) Patentinhaber: Robert Bosch GmbH, 70442 Stuttgart (DE)
(72) Erfinder: ERSEK, Zoltan, 70180 Stuttgart (DE); MARKUS, Janos, H-2330 Dunaharaszti (HU)
(86) Internationale Anmeldenummer: PCT/EP2011/070369
(87) Internationale Veröffentlichungsnummer: WO 2012/089405

(56) Entgegenhaltungen:
- EP-A2- 2 110 212
- FR-A1- 2 941 793

## Beschreibung

### Technisches Gebiet

Die Erfindung betrifft Verfahren und Vorrichtungen zum Generieren einer Geschwindigkeitsangabe basierend auf einem Positionsgeber. Die Erfindung betrifft weiterhin Schließvorrichtungen mit einer Einklemmerkennung zur Realisierung einer Einklemmschutzfunktion.

### Stand der Technik

Elektrische Antriebseinheiten werden in einer Vielzahl von Anwendungen eingesetzt und dienen insbesondere dazu, eine Bewegung von Elementen hervorzurufen. Beispielsweise können Antriebseinheiten in automatischen Schließvorrichtungen, wie z. B. elektrischen Fensterhebern oder Schiebedächern in Kraftfahrzeugen, eingesetzt werden. Um dort den Komfort für die Passagiere zu erhöhen, kann eine zusätzliche Funktion implementiert sein, so dass der Bediener nur die Öffnungs- oder Schließbewegung des Fensters starten muss, indem er einmalig ein Betätigungselement für eine bestimmte Richtung, d. h. eine Öffnungs- oder Schließrichtung, betätigt. Daraufhin wird auch nach dem Loslassen der Betätigung des Betätigungselements das Fenster automatisch bewegt.

Bei einer solchen oder einer vergleichbaren Funktion braucht der Bediener die weitere Bewegung des Elements bzw. des Fensters nicht weiter zu überwachen und es besteht daher die Gefahr, dass Objekte oder Körperteile zwischen dem beweglichen Teil und einem fest stehenden Teil eingeklemmt werden. Insbesondere elektrische Fensterheber müssen mit einer so genannten Anti-Einklemmfunktion versehen sein, die ein eingeklemmtes Objekt oder Körperteil erkennt und dieses wieder aus dem eingeklemmten Zustand entlässt.

Die Einklemmerkennung kann basierend auf Messgrößen von verschiedenen Arten von Sensoren durchgeführt werden. Beispielsweise kann ein Drucksensor, wie ein piezoelektrischer Sensor, an einer Anschlagskante, gegen die das bewegliche Element verfährt, das Auftreffen des Elements auf der Anschlagskante detektieren. Mithilfe eines Bewegungssensors, wie beispielsweise eines HallSensors, AMR-Sensors, GMR-Sensors oder dergleichen, kann die Bewegung des beweglichen Elements oder die Drehbewegung der das bewegliche Element antreibenden Antriebseinheit detektiert werden. Alternativ oder zusätzlich kann auch ein Stromsensor zum Detektieren eines Motorstroms der Antriebseinheit vorgesehen sein.

Aus Kostengründen werden zur Realisierung derartiger Funktionen die Geschwindigkeitssensoren basierend auf magnetischen oder optischen Positionsgebern eingesetzt, die direkt an einer Abtriebswelle der Antriebseinheit angeordnet sind und bei einer Bewegung um einen bestimmten Winkelbereich einen Impuls bzw. einen Pegelwechsel ausgeben. Der zeitlichen Abstand zwischen den von dem Positionsgeber erzeugten Flanken hängt dabei direkt von der Drehzahl der Antriebseinheit ab. Die Drehzahl wird dabei aus dem zeitlichen Abstand zwischen den Flanken bzw. aus deren Frequenz ermittelt. Naturgemäß schwankt aus diesem Grund die zeitliche Auflösung der mithilfe der Positionsgeber ermittelten Drehzahlangabe, da insbesondere bei geringen Drehzahlen der zeitliche Abstand zwischen den einzelnen Flanken des Positionsgebers größer wird. Dies führt dazu, dass innerhalb des Zeitraums zwischen zwei Flanken keine aktuelle Drehzahlangabe vorliegt. Insbesondere bei zeitkritischen Anwendungen wie der Einklemmschutzfunktion bei elektrischen Schließvorrichtungen kann der Zeitraum, während der keine aktuelle Drehzahlangabe bereitgestellt wird, zu groß sein, um die gesetzlichen Anforderungen an die Reaktionsgeschwindigkeit und Empfindlichkeit des Erkennens eines Einklemmens eines Objekts oder Körperteils zu erfüllen.

Es ist daher Aufgabe der vorliegenden Erfindung, ein Verfahren und eine Vorrichtung zur Verfügung zu stellen, mit denen auch bei der Verwendung eines Positionsgebers als Drehzahl- oder Bewegungssensor eine kontinuierliche Drehzahlangabe bereitgestellt werden kann.

Mit der EP2110212A2 ist ein Endoskop und ein Verfahren zum Betreiben eines solchen bekannt geworden, bei dem mehrere Teile mittels Gelenken miteinander verbunden sind. Dabei werden die Bewegungsbereiche der elektromotorisch verstellbaren Teile mittels Sensorsignalen überwacht, ob sich die Teile in dem durch den Steuerbefehl vorgesehenen Bereich befinden.

### Offenbarung der Erfindung

Diese Aufgabe wird durch das Verfahren zum Bereitstellen einer kontinuierlichen Drehzahlangabe gemäß Anspruch 1 sowie durch die Vorrichtung, das System sowie das elektrische Schließsystem gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Bereitstellen einer Bewegungsangabe aus einem Sensorsignal eines Positionsgebers vorgesehen, wobei die Bewegungsangabe eine Bewegungsgeschwindigkeit angibt, wobei das Sensorsignal des Positionsgebers eine Flanke nach einer Bewegung über einen bestimmten Wegbereich generiert. Das Verfahren umfasst die folgenden Schritte:
- Ermitteln einer Impulszeitdauer als zeitlicher Abstand zwischen den beiden zuletzt bereitgestellten Flanken des Sensorsignals;
- abhängig davon, ob seit der zuletzt bereitgestellten Flanke des Sensorsignals eine Zeitdauer verstrichen ist, die der Impulszeitdauer entspricht, Bereitstellen einer Angabe, die von der Impulszeitdauer abhängt, oder einer Angabe, die von der Zeitdauer seit der letzten Flanke des Sensorsignals abhängt, als Bewegungsangabe.

Eine Idee der vorliegenden Erfindung besteht darin, eine kontinuierliche bzw. quasi-kontinuierliche Bewegungsangabe bereitzustellen, die basierend auf einem von einem Positionsgeber zur Detektion einer Bewegung erzeugten Sensorsignal bereitgestellt wird, und zwar auch bei geringeren Geschwindigkeiten mit einer verbesserten Genauigkeit und zeitlichen Auflösung. Mit anderen Worten ist das obige Verfahren dort vorteilhaft, wo Funktionen ausgeführt werden sollen, bei denen Bewegungsangaben in geringeren zeitlichen Abständen benötigt werden als die Flanken des Sensorsignals eines entsprechenden Positionsgebers eintreffen. Dadurch ist es möglich, eine aktuellere Bewegungsangabe auch bei niedrigen Geschwindigkeiten bereitzustellen, bei denen die zeitliche Abfolge der Flanken des Sensorsignals zu gering wird, um daraus eine aktuelle Bewegungsangabe direkt zu ermitteln. Insbesondere innerhalb des Zeitraums seit der letzten Flanke des Sensorsignals wird bei bisherigen Verfahren keine Bewegungsangabe bereitgestellt. Aus diesem Grund schlägt das obige Verfahren vor, die Bewegungsangabe insbesondere auch nach dem Empfangen der letzten Flanke des Sensorsignals zu aktualisieren, um eine kontinuierliche oder quasi kontinuierliche Bewegungsangabe bereitzustellen.

Als Bewegungsangabe kann eine Angabe bereitgestellt werden, die von der Impulszeitdauer abhängt, wenn seit der zuletzt bereitgestellten Flanke noch kein Zeitraum verstrichen ist, der der Impulszeitdauer entspricht.

Es kann vorgesehen sein, dass die Bewegungsangabe als das Verhältnis zwischen dem bestimmten Wegbereich und der Impulszeitdauer oder als das Verhältnis zwischen dem bestimmten Wegbereich und der seit der letzten Flanke des Sensorsignals verstrichenen Zeitdauer bestimmt wird.

Weiterhin kann die Bewegungsangabe kontinuierlich oder in regelmäßigen zeitlichen Abständen bereitgestellt werden.

Gemäß einer Ausführungsform können die regelmäßigen zeitlichen Abstände kleiner sein als die zeitlichen Abstände der Flanken des Sensorsignals bei einer vorgegebenen maximalen Bewegungsgeschwindigkeit.

Gemäß einem weiteren Aspekt ist eine Vorrichtung zum Bereitstellen einer Bewegungsangabe aus einem Sensorsignal eines Positionsgebers vorgesehen, wobei die Bewegungsangabe eine Bewegungsgeschwindigkeit angibt, wobei das Sensorsignal des Positionsgebers eine Flanke nach einer Bewegung über einen bestimmten Wegbereich generiert. Die Vorrichtung ist ausgebildet:
- um eine Impulszeitdauer als zeitlichen Abstand zwischen den beiden zuletzt bereitgestellten Flanken des Sensorsignals zu ermitteln;
- um, abhängig davon, ob seit der zuletzt bereitgestellten Flanke des Sensorsignals eine Zeitdauer verstrichen ist, die der Impulszeitdauer entspricht, eine Angabe, die von der Impulszeitdauer abhängt, oder eine Angabe, die von der Zeitdauer seit der letzten Flanke des Sensorsignals abhängt, als Bewegungsangabe bereitzustellen.

Gemäß einem weiteren Aspekt ist ein System, insbesondere ein automatisches Schließsystem vorgesehen, umfassend:
- ein zu bewegendes Element;
- eine Antriebseinheit, die zum Bewegen des zu bewegenden Elements mit diesem gekoppelt ist;
- einen Positionsgeber, der abhängig von einer Bewegung der Antriebseinheit oder des Elements, Sensorsignale ausgibt, die nach einem Verfahren über einen bestimmten Wegbereich eine Flanke aufweisen,
- eine Steuereinheit, die ausgebildet ist,
   - um eine Impulszeitdauer als zeitlichen Abstand zwischen den beiden zuletzt bereitgestellten Flanken des Sensorsignals zu ermitteln und
   - um, abhängig davon, ob seit der zuletzt bereitgestellten Flanke des Sensorsignals eine Zeitdauer verstrichen ist, die der Impulszeitdauer entspricht, eine Angabe, die von der Impulszeitdauer abhängt, oder eine Angabe, die von der Zeitdauer seit der letzten Flanke des Sensorsignals abhängt, als Bewegungsangabe bereitzustellen.

Gemäß einem weiteren Aspekt ist eine Verwendung der obigen Vorrichtung für ein Schließsystem vorgesehen.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Fensterhebersystems mit einem Positionsgeber als Drehzahlsensor;
- Figur 2: ein Flussdiagramm zur Veranschaulichung der Funktion zum Bereitstellen einer kontinuierlichen Bewegungsangabe; und
- Figur 3: ein Diagramm zur Darstellung der von einem Signal eines Positionsgebers abhängigen kontinuierlichen Bewegungsangabe.

### Beschreibung von Ausführungsformen

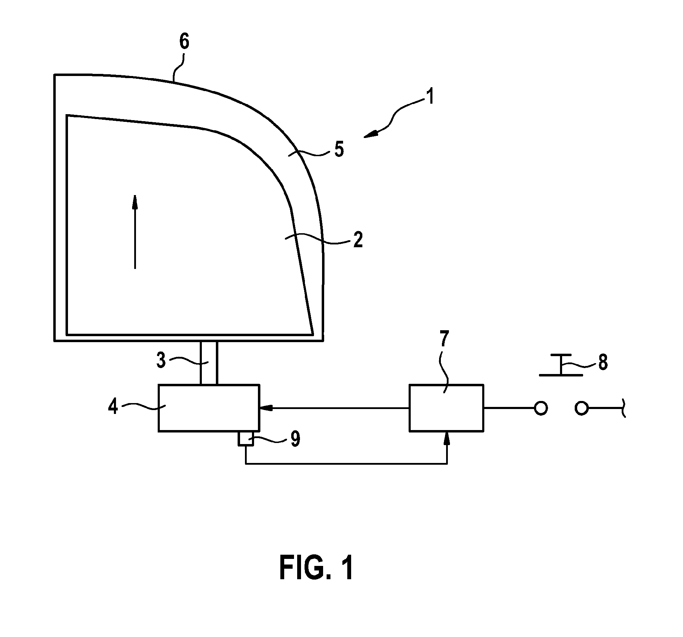

In Figur 1 ist als Beispiel für eine Anwendung der Funktion der kontinuierlichen Bewegungsangabe eine elektrische Antriebseinheit eines automatischen Fensterhebersystems 1 für ein Seitenfenster eines Kraftfahrzeugs dargestellt. Das Fensterhebersystem 1 steht stellvertretend für jede Art von Antriebssystem zum Antreiben von Komponenten, insbesondere für Schließsysteme in Kraftfahrzeuganwendungen.

Das automatische Fensterhebersystem 1 umfasst eine Fensterscheibe 2 als bewegliches Element, die mithilfe eines Schließmechanismus 3 in einem Fensterrahmen 5 beweglich verfahrbar ist. Die Fensterscheibe 2 wird über den Schließmechanismus 3, der ein geeignetes Getriebe oder eine Mechanik umfassen kann, durch einen Elektromotor 4 als elektrische Antriebseinheit angetrieben. Der Elektromotor 4 wird von einer Steuereinheit 7 abhängig von einer Betätigung eines Bedienelements 8 angesteuert, so dass sich die Fensterscheibe 2 in einer vorgegebenen Richtung bewegt.

Beispielsweise kann die Fensterscheibe 2 bei Betätigung des Bedienelements 8 zum Schließen des Fensters durch eine Rotation des Elektromotors 4 nach oben, d. h. in eine Schließrichtung, bewegt werden, so dass die Fensterscheibe 2 eine Schließbewegung ausführt. Analog kann die Fensterscheibe 2 bei Betätigung des Bedienelements 8 zum Öffnen des Fensters durch eine entgegengesetzte Rotation des Elektromotors 4 nach unten, d. h. in eine Öffnungsrichtung, bewegt werden, so dass die Fensterscheibe 2 eine Öffnungsbewegung ausführt.

Weiterhin ist es - implementiert durch die Steuereinheit 7 - möglich, durch eine Betätigung des Bedienelements 8 auf eine bestimmte Weise einen Automatiklaufmodus zu aktivieren, bei dem selbst nach Loslassen des Bedienelements 8 die zuvor vorgegebene Bewegung der Fensterscheibe 2 fortgesetzt wird, bis entweder das Bedienelement 8 erneut betätigt wird oder bis die Fensterscheibe 2 eine Anschlagposition in einer vollständigen Öffnungsstellung oder in einer vollständigen Schließstellung erreicht hat.

Ferner ist der Elektromotor 4 bzw. der Schließmechanismus 3 mit einem Positionsgeber 9 versehen, der eine relative Positionsänderung einer Bewegung der Welle des Elektromotors 4, des Schließmechanismus 3 bzw. der Fensterscheibe 2 detektieren kann. Insbesondere gibt der Positionsgeber 9 bei einer der Drehung der Welle des Elektromotors 4 entsprechenden Drehbewegung Impulse ab. Beispiele für derartige Positionsgeber 9 sind ein Hall-Sensor, ein GMR-Sensor, ein AMR-Sensor und dergleichen, die eine von einer Drehbewegung abhängige Änderung eines Magnetfelds detektieren. Der Positionsgeber 9 gibt bei einer Bewegung der Welle des Elektromotors 4 ein Signal mit verschiedenen Pegeln als Bewegungsangabe aus, wobei nach Überstreichen eines bestimmten Winkelbereichs eine Pegeländerung erfolgt, so dass eine Flanke eines Sensorsignals erzeugt wird.

Die Impulse des Positionsgebers 9 werden dazu verwendet, die Drehzahl des Elektromotors 4 zu ermitteln und nachgeordneten Funktionen bereitzustellen. Auch können die bereitgestellten Impulse gezählt werden, um eine absolute Position der Welle des Elektromotors 4 bereitzustellen, die für eine Kommutierung des Elektromotors 4 verwendet wird, sofern dieser elektronisch kommutiert ist.

In der Steuereinheit 7 ist eine Einklemmschutzfunktion realisiert, die anhand von Motorkenngrößen einen Einklemmfall detektiert. Ein Einklemmfall liegt vor, wenn ein Gegenstand oder ein Körperteil zwischen eine der Anschlagkante gegenüberliegende Kante der Fensterscheibe 2 und den Fensterrahmen 5 gerät und durch eine Schließbewegung der Fensterscheibe 2 eine Kraft auf den Gegenstand oder das Körperteil ausgeübt wird.

Der Einklemmfall kann in der Steuereinheit 7 auf Grundlage oder unter Zuhilfenahme einer Bewegungsangabe der Fensterscheibe, die aufgrund der starren Kopplung durch den Schließmechanismus 3 in Form der Drehzahl des Elektromotors 4 ermittelt wird, festgestellt werden. Dazu wird kontinuierlich die Drehzahl des Elektromotors 4 überwacht. Bei Feststellen einer unerwartet niedrigen Drehzahl und/oder bei Feststellen eines unerwartet niedrigen Gradienten, beispielsweise eines Gradienten unter einem Gradientenschwellenwert, der unter Umständen von der Position der Fensterscheibe 2 abhängen kann, wird ein Einklemmfall erkannt.

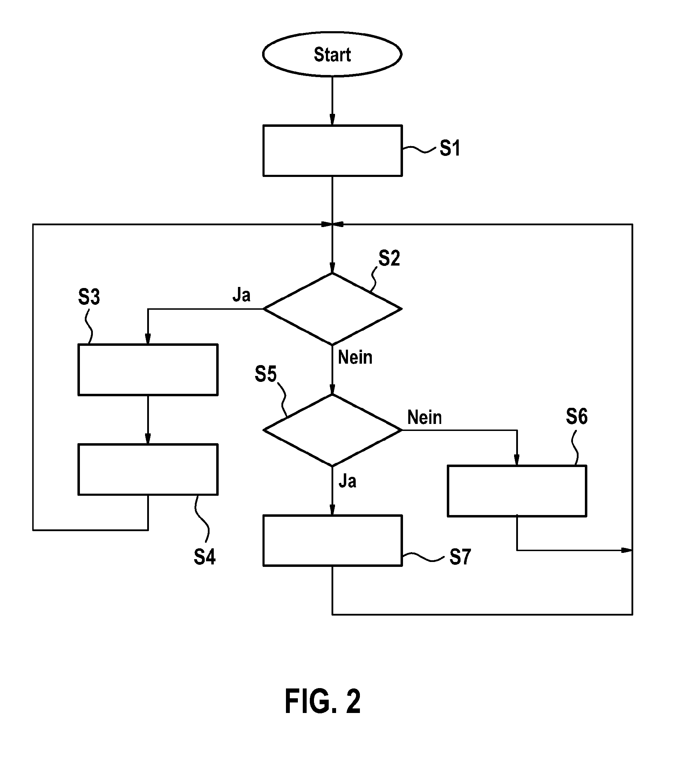

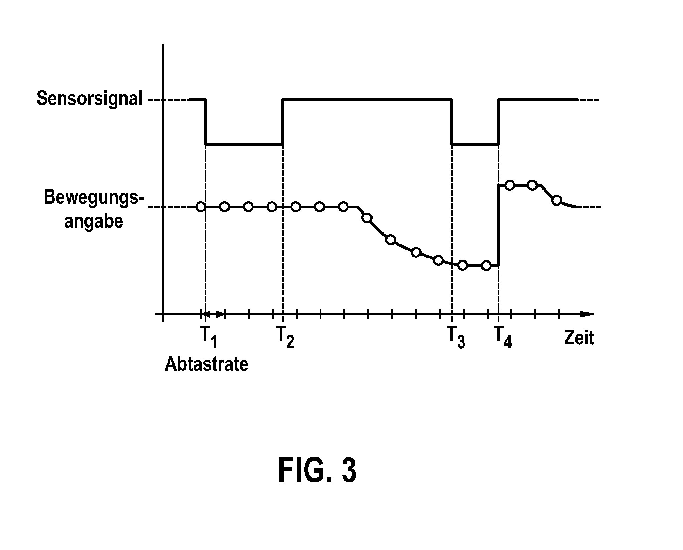

Insbesondere bei Geschwindigkeiten der Fensterscheibe 2, die aufgrund von Reibung oder sonstigen Einflüssen gering sind, verringert sich die Frequenz der von dem Positionsgeber 9 bereitgestellten Flanken des Sensorsignals. Dies kann dazu führen, dass die jeweils aktuellste Bewegungsangabe, die aus den Sensorsignalen generiert wird, die Geschwindigkeit bzw. die Drehzahl zu einem Zeitpunkt darstellt, der zu weit in der Vergangenheit liegt, um eine zeitnahe Detektion eines Einklemmfalls zu gewährleisten. Um auch bei geringeren Geschwindigkeiten der Fensterscheibe 2 bzw. geringeren Drehzahlen des Elektromotors 4 eine kontinuierliche oder quasi-kontinuierliche Bewegungsangabe bzw. Drehzahlangabe bereitzustellen, wird im Folgenden in Verbindung mit dem Flussdiagramm der Figur 2 ein Verfahren zum Bereitstellen der kontinuierlichen Bewegungsangabe beschrieben. Das Verfahren wird weiterhin anhand des Zeitdiagramms der Figur 3 veranschaulicht. Figur 3 zeigt den Verlauf des Sensorsignals und den Verlauf der Bewegungsangabe, die aus dem Sensorsignal generiert wird.

Das Verfahren setzt ein, nachdem nach der Inbetriebnahme des Fensterhebersystems 1 nach einer ersten Flanke zum Zeitpunkt T₁ eine zweite Flanke zu einem Zeitpunkt T₂ von dem Positionsgeber 9 generiert worden ist. Eine Flanke des Sensorsignals entspricht einem Wechsel eines Pegels des Sensorsignals. Mithilfe der beiden empfangenen Flanken wird ein zeitlicher Abstand zwischen der ersten und der zweiten Flanke ermittelt.

Nachdem in Schritt S1 der zeitliche Abstand dT =T₂ - T₁ als Impulszeitdauer zwischen den beiden zuletzt empfangenen aufeinanderfolgenden Flanken ermittelt worden ist, wird als permanente Bewegungsangabe eine Angabe über eine Geschwindigkeit bzw. eine Drehzahl bereitgestellt, die von der Impulszeitdauer bezüglich der letzten beiden aufeinander folgenden Flanken abhängt. Die Bewegungsangabe ergibt sich daraus, dass der Winkelbereich oder der Wegbereich bekannt ist, um den die Welle des Elektromotors 4 bzw. die Fensterscheibe 2 bewegt worden ist, nachdem eine nächste Flanke des Sensorsignals generiert wird. Das Verhältnis von dem Winkelbereich zu der Impulszeitdauer dT bezüglich der beiden zuletzt empfangenen Flanken ergibt die Bewegungsangabe. Beginnend mit der zuletzt empfangenen Flanke zum Zeitpunkt T₂ wird nun das Sensorsignal weiterhin abgefragt, ob eine weitere Flanke empfangen worden ist (Schritt S2). Ist dies zu einem Zeitpunkt T₃ der Fall (Alternative: Ja), so wird in Schritt S3 die Impulszeitdauer als zeitlicher Abstand dT zwischen den beiden zuletzt empfangenen Signalflanken als dT =T₃ - T₂ ermittelt, die Bewegungsangabe in Schritt S4 wie oben beschrieben entsprechend der erneut ermittelten Impulszeitdauer dT angepasst und eine Bewegungsangabe bereitgestellt. Anschließend wird zu Schritt S2 zurückgesprungen.

Wird in Schritt S2 keine Flanke des Sensorsignals detektiert (Alternative: Nein), so wird in Schritt S5 abgefragt, ob die seit der letzten Flanke verstrichene Zeitdauer größer ist als die zuletzt ermittelte Impulszeitdauer als zeitlicher Abstand zwischen den beiden zuletzt empfangenen Flanken des Sensorsignals. Ist dies nicht der Fall (Alternative: Nein), so wird weiterhin in Schritt S6 die Bewegungsangabe ausgegeben, die sich aus der aktuellsten Impulszeitdauer dT ergibt, und zu Schritt S2 zurückgesprungen. Diese Bewegungsangabe wird der zuletzt in Schritt S1 oder Schritt S4 ermittelten Bewegungsangabe entsprechen.

Wird in Schritt S5 festgestellt, dass die Zeitdauer seit der zuletzt empfangenen Flanke des Sensorsignals größer ist als die aktuellste Impulszeitdauer (Alternative: Ja), so wird in Schritt S7 die Bewegungsangabe entsprechend der seit der letzten Flanke des Sensorsignals verstrichenen Zeitdauer korrigiert. Dies wird durchgeführt, indem wie oben beschrieben die Bewegungsangabe als das Verhältnis aus dem Winkelbereich oder dem Wegbereich, um den die Welle des Elektromotors 4 bzw. die Fensterscheibe 2 bewegt worden ist, und der seit der letzten Flanke verstrichenen Zeitdauer bestimmt wird. Anschließend wird zu Schritt S2 zurückgesprungen.

Dies ist auch in Figur 3 dargestellt. Man erkennt, dass nach Verstreichen der Impulszeitdauer dT seit Empfangen der letzten Flanke des Sensorsignals zum Zeitpunkt T₂ die Bewegungsangabe ab dem Zeitpunkt T₂+ dT = T₂ + (T₂- T₁) abnimmt, bis die nächste Flanke des Sensorsignals empfangen wird (Zeitpunkt T₃). Beginnend mit dem Zeitpunkt T₃ wird, wie zuvor beschrieben, die Impulszeitdauer dT als zeitlicher Abstand zwischen den beiden zuletzt empfangenen Flanken (T₃, T₂) des Sensorsignals permanent aktualisiert und die Bewegungsangabe wird, so lange während des Zeitraums der Impulszeitdauer ausgehend von dem Zeitpunkt T₃ keine weitere Flanke des Sensorsignals empfangen wird, zunächst auf der zuletzt ermittelten Bewegungsangabe gehalten oder nach dem Verstreichen der Impulszeitdauer entsprechend permanent mit der seit der letzten Flanke verstrichenen Zeitdauer aktualisiert.

Erfolgt eine Detektion einer Flanke des Sensorsignals innerhalb der Impulszeitdauer dT seit dem letzten Empfang einer Flanke des Sensorsignals, wie dies im Fall der Flanke zum Zeitpunkt T₄ dargestellt ist, so wird die Bewegungsangabe unmittelbar aktualisiert, so dass es auch zu einem Sprung der Bewegungsangabe kommen kann.

Die bereitgestellte Bewegungsangabe kann entweder permanent zum Abrufen durch eine nachfolgende Funktion bereitgestellt werden oder sie kann zyklisch mit einer Frequenz gemäß einer Abtast- oder Bereitstellungsrate bereitgestellt werden, die größer ist als die Frequenz des von dem Positionsgeber 9 bereitgestellten Sensorsignals bei der maximalen Drehzahl, bzw. in Zeitabständen t bereitgestellt werden, die kleiner sind als die Impulszeitdauern der Flanken des Sensorsignals bei der maximalen Drehzahl.

## Patentansprüche

1. Verfahren zum Bereitstellen einer Bewegungsangabe aus einem Sensorsignal eines Positionsgebers (9), wobei die Bewegungsangabe eine Bewegungsgeschwindigkeit angibt, wobei das Sensorsignal des Positionsgebers (9) eine Flanke nach einer Bewegung über einen bestimmten Wegbereich generiert, mit folgenden Schritten:
- Ermitteln (S1) einer Impulszeitdauer (dT) als zeitlicher Abstand zwischen den beiden zuletzt bereitgestellten Flanken des Sensorsignals;
- abhängig davon, ob seit der zuletzt bereitgestellten Flanke des Sensorsignals eine Zeitdauer verstrichen ist, die der Impulszeitdauer (dT) entspricht, Bereitstellen (S4, S6) einer Angabe, die von der Impulszeitdauer (dT) abhängt, oder einer Angabe, die von der Zeitdauer seit der letzten Flanke des Sensorsignals abhängt, als Bewegungsangabe.

2. Verfahren nach Anspruch 1, wobei als Bewegungsangabe eine Angabe bereitgestellt wird, die von der Impulszeitdauer (dT) abhängt, wenn seit der zuletzt bereitgestellten Flanke noch kein Zeitraum verstrichen ist, der der Impulszeitdauer (dT) entspricht.

3. Verfahren nach Anspruch 1 oder 2, wobei die Bewegungsangabe als das Verhältnis zwischen dem bestimmten Wegbereich und der Impulszeitdauer (dT) oder als das Verhältnis zwischen dem bestimmten Wegbereich und der seit der letzten Flanke des Sensorsignals verstrichenen Zeitdauer bestimmt wird.

4. Verfahren nach einem der Ansprüche 1 bis 3, wobei die Bewegungsangabe kontinuierlich oder in regelmäßigen zeitlichen Abständen bereitgestellt wird.

5. Verfahren nach Anspruch 3, wobei die regelmäßigen zeitlichen Abstände kleiner sind als die zeitlichen Abstände der Flanken des Sensorsignals bei einer vorgegebenen maximalen Bewegungsgeschwindigkeit.

6. Vorrichtung zum Bereitstellen einer Bewegungsangabe aus einem Sensorsignal eines Positionsgebers (9), wobei die Bewegungsangabe eine Bewegungsgeschwindigkeit angibt, wobei das Sensorsignal des Positionsgebers (9) eine Flanke nach einer Bewegung über einen bestimmten Wegbereich generiert, wobei die Vorrichtung ausgebildet ist:
- um eine Impulszeitdauer (dT) als zeitlichen Abstand zwischen den beiden zuletzt bereitgestellten Flanken des Sensorsignals zu ermitteln;
- um, abhängig davon, ob seit der zuletzt bereitgestellten Flanke des Sensorsignals eine Zeitdauer verstrichen ist, die der Impulszeitdauer (dT) entspricht, eine Angabe, die von der Impulszeitdauer (dT) abhängt, oder eine Angabe, die von der Zeitdauer seit der letzten Flanke des Sensorsignals abhängt, als Bewegungsangabe bereitzustellen.

7. System mit einer Vorrichtung nach Anspruch 6, insbesondere ein automatisches Schließsystem, umfassend:
- ein zu bewegendes Element (2);
- eine Antriebseinheit (4), die zum Bewegen des zu bewegenden Elements (2) mit diesem gekoppelt ist;
- einen Positionsgeber (9), der abhängig von einer Bewegung der Antriebseinheit oder des Elements Sensorsignale ausgibt, die nach einem Verfahren über einen bestimmten Wegbereich eine Flanke aufweisen,
- eine Steuereinheit (7), die ausgebildet ist, um eine Impulszeitdauer (dT) als zeitlichen Abstand zwischen den beiden zuletzt bereitgestellten Flanken des Sensorsignals zu ermitteln; und
- um, abhängig davon, ob seit der zuletzt bereitgestellten Flanke des Sensorsignals eine Zeitdauer verstrichen ist, die der Impulszeitdauer (dT) entspricht, eine Angabe, die von der Impulszeitdauer abhängt, oder eine Angabe, die von der Zeitdauer seit der letzten Flanke des Sensorsignals abhängt, als Bewegungsangabe bereitzustellen.

8. Verwendung der Vorrichtung nach Anspruch 6 für ein Schließsystem.

9. Computerprogrammprodukt, das einen Programmcode enthält, der, wenn er auf einer Datenverarbeitungseinheit ausgeführt wird, ein Verfahren nach einem der Ansprüche 1 bis 5 durchführt.

## Claims

1. Method for providing an indication of movement from a sensor signal from a position transmitter (9), the indication of movement indicating a speed of movement, the sensor signal from the position transmitter (9) generating an edge following a movement over a particular travel range, having the following steps of:
- determining (S1) a pulse duration (dT) as the interval of time between the last two provided edges of the sensor signal;
- providing (S4, S6) an indication which depends on the pulse duration (dT) or an indication which depends on the period since the last edge of the sensor signal as the indication of movement, depending on whether a period corresponding to the pulse duration (dT) has elapsed since the last provided edge of the sensor signal.

2. Method according to Claim 1, an indication which depends on the pulse duration (dT) being provided as the indication of movement if a period corresponding to the pulse duration (dT) has not yet elapsed since the last provided edge.

3. Method according to Claim 1 or 2, the indication of movement being determined as the ratio between the particular travel range and the pulse duration (dT) or as the ratio between the particular travel range and the period elapsed since the last edge of the sensor signal.

4. Method according to one of Claims 1 to 3, the indication of movement being provided continuously or at regular intervals of time.

5. Method according to Claim 3, the regular intervals of time being shorter than the intervals of time between the edges of the sensor signal at a predefined maximum speed of movement.

6. Apparatus for providing an indication of movement from a sensor signal from a position transmitter (9), the indication of movement indicating a speed of movement, the sensor signal from the position transmitter (9) generating an edge following a movement over a particular travel range, the apparatus being designed:
- to determine a pulse duration (dT) as the interval of time between the last two provided edges of the sensor signal;
- to provide an indication which depends on the pulse duration (dT) or an indication which depends on the period since the last edge of the sensor signal as the indication of movement, depending on whether a period corresponding to the pulse duration (dT) has elapsed since the last provided edge of the sensor signal.

7. System having an apparatus according to Claim 6, in particular an automatic closing system, comprising:
- an element (2) to be moved;
- a drive unit (4) which is coupled to the element (2) to be moved in order to move the latter;
- a position transmitter (9) which, depending on a movement of the drive unit or of the element, outputs sensor signals which have an edge following movement over a particular travel range,
- a control unit (7) which is designed to determine a pulse duration (dT) as the interval of time between the last two provided edges of the sensor signal; and
- to provide an indication which depends on the pulse duration or an indication which depends on the period since the last edge of the sensor signal as the indication of movement, depending on whether a period corresponding to the pulse duration (dT) has elapsed since the last provided edge of the sensor signal.

8. Use of the apparatus according to Claim 6 for a closing system.

9. Computer program product containing a program code which carries out a method according to one of Claims 1 to 5 when executed on a data processing unit.

## Revendications

1. Procédé destiné à fournir une indication de déplacement à partir d'un signal de capteur d'un capteur de position (9), dans lequel l'indication de déplacement indique une vitesse de déplacement, dans lequel le signal de capteur du capteur de position (9) génère un front après un déplacement sur un tronçon de trajet déterminé, comprenant les étapes consistant à :
- calculer (S1) une durée d'impulsion (dT) en tant que distance temporelle entre les deux fronts fournis en dernier du signal de capteur ;
- en fonction de cela, s'il s'est écoulé depuis le front fourni en dernier du signal de capteur une durée qui correspond à la durée d'impulsion (dT), fournir (S4, S6) une se indication qui dépend de la durée d'impulsion (dT), ou une indication qui dépend de la durée s'étant écoulée depuis le dernier front du signal de capteur, en tant qu'indication de déplacement.

2. Procédé selon la revendication 1, dans lequel il est fourni en tant qu'indication de déplacement une indication qui dépend de la durée d'impulsion (dT) lorsqu'il ne s'est pas encore écoulé depuis le front fourni en dernier un intervalle de temps correspondant à la durée d'impulsion (dT).

3. Procédé selon la revendication 1 ou 2, dans lequel l'indication de déplacement est déterminée en tant que rapport entre le segment de trajet déterminé et la durée d'impulsion (dT) ou en tant que rapport entre le segment de trajet déterminé et l'intervalle de temps s'étant écoulé depuis le dernier front du signal de capteur.

4. Procédé selon l'une quelconque des revendications 1 à 3, dans lequel l'indication de déplacement est fournie en continu ou à des intervalles de temps réguliers.

5. Procédé selon la revendication 3, dans lequel les intervalles de temps réguliers sont inférieurs aux intervalles de temps des fronts des signaux de capteur pour une vitesse de déplacement maximale prédéterminée.

6. Dispositif destiné à fournir une indication de déplacement à partir d'un signal de capteur d'un capteur de position (9), dans lequel l'indication de déplacement indique une vitesse de déplacement, dans lequel le signal de capteur du capteur de position (9) génère un front après un déplacement sur un segment de trajet déterminé, dans lequel le dispositif est conçu pour :
- calculer une durée d'impulsion (dT) en tant qu'intervalle de temps entre les deux fronts fournis en dernier du signal de capteur ;
- en fonction de cela, s'il s'est écoulé depuis le front fourni en dernier du signal de capteur une durée qui correspond à la durée d'impulsion (dT), fournir une indication qui dépend de la durée d'impulsion (dT) ou une indication qui dépend de la durée s'étant écoulée depuis le dernier front du signal de capteur, en tant qu'indication de déplacement.

7. Système comportant un dispositif selon la revendication 6, notamment un système de fermeture automatique, comprenant :
- un élément à déplacer (2) ;
- une unité d'entraînement (4) qui est couplée audit élément (2) à déplacer afin de déplacer ce dernier ;
- un capteur de position (9) qui délivre en fonction d'un déplacement de l'unité d'entraînement ou de l'élément, des signaux de capteur qui présentent un front après déplacement sur un segment de trajet déterminé,
- une unité de commande (7) qui est conçue pour obtenir une durée d'impulsion (dT) en tant qu'intervalle de temps entre les deux fronts fournis en dernier du signal de capteur ; et
- afin de fournir, en fonction de celle-ci, s'il s'est écoulé depuis le front fourni en dernier qui correspond à la durée d'impulsion (dT), une indication qui dépend de la durée d'impulsion ou une indication qui dépend de la durée s'étant écoulée depuis le dernier front du signal de capteur, en tant qu'indication de déplacement.

8. Utilisation du dispositif selon la revendication 6 pour un système de fermeture.

9. Produit de programme informatique comportant un code de programme qui, lorsqu'il est exécuté sur une unité de traitement de données, met en oeuvre un procédé selon l'une des revendications 1 à 5.
